# EUROPEAN PATENT APPLICATION

(11) **EP 4 834 757 A2**
(43) Date of publication of application: **04.11.2026**
(21) Application number: 26205805.0
(22) Date of filing: 05.02.2024
(51) Int. Cl.: B64C 27/08

(54) **FLYING BODY, FOLDING METHOD, AND ARRANGEMENT METHOD**

(30) Priority: 24.02.2023 JP 2023027728; 11.09.2023 JP 2023147011
(62) Document number(s) of the earlier application(s) in accordance with Art. 76 EPC: 24760102.4 / 4 671 123
(71) Applicant: Skydrive Inc., Tokyo 102-0093 (JP)
(72) Inventor: ADACHI, Naohito, Tokyo, 1020093 (JP); COVILLE, Arnaud, Tokyo, 1020093 (JP); KOBAYASHI, Shinichi, Tokyo, 1020093 (JP); OKADA, Shinji, Tokyo, 1020093 (JP); TOMITA, Masatoshi, Tokyo, 1020093 (JP); OCHI, Akio, Tokyo, 1020093 (JP); SHEEN, Phillip, Tokyo, 1020093 (JP)
(74) Representative: Winter, Brandl - Partnerschaft mbB

(57) **Abstract**

[Problem]

To provide an aircraft in which secondary damage to other rotors or the fuselage due to rotor breakage can be reduced.

[Solution]

One aspect of the present invention provides an aircraft comprising a fuselage, and a plurality of rotors. The fuselage supports the plurality of rotors, the plurality of rotors include a first rotor and a second rotor, and the plurality of rotors are arranged such that the fuselage or the second rotor is not located on a plane extending in a radial direction of a rotational surface of the first rotor.

## Description

### BACKGROUND

The present invention relates to an aircraft and an arrangement method.

### RELATED ART

PTL 1 discloses an unmanned aircraft.

The unmanned aircraft includes a plurality of horizontal rotors having a horizontal rotor blade, and a vertical rotor having a vertical rotor blade which is a variable-pitch propeller, and to address the above issue, there is provided an operation method for the unmanned aircraft including a plurality of horizontal rotors having a horizontal rotor blade, and a vertical rotor having a vertical rotor blade which is a variable-pitch propeller, the operation method including an idling step in which the fuselage is moved by the plurality of horizontal rotors while idling the vertical rotor with zero or approximately zero pitch angle of the vertical rotor.

### PRIOR ART DOCUMENTS

### Patent document

PTL 1: Japanese Unexamined Patent Application Publication No. 2022-095292

### SUMMARY

### Problems to be Solved by Invention

In a conventional structure, at the time of propeller breakage, broken pieces may collide with other propellers or the fuselage structure, and as a result of functional damage, the aircraft may crash. To cope with this, the number of rotors is increased to ensure redundancy which results in a complicated fuselage, or the fuselage is reinforced to prevent breakage, causing an increase in the weight. The weight increase has caused decrease in the payload, reduction in the flight range, or degradation of the performance.

In consideration of the above-mentioned circumstances, the present invention provides an aircraft and an arrangement method in which secondary damage to other rotors or the fuselage due to rotor breakage can be reduced. Means for Solving Problems

According to an aspect of the present invention, an aircraft is provided. The aircraft comprises a fuselage and a plurality of rotors. The fuselage supports the plurality of rotors. The plurality of rotors include a first rotor and a second rotor and are arranged such that the fuselage or the second rotor is not located on a plane extending in a radial direction of a rotational surface of the first rotor. According to another aspect of the present invention, an arrangement method is provided. The arrangement method comprises a preparation step and an arrangement step. In the preparation step, a fuselage and a plurality of rotors including a first rotor and a second rotor are prepared. In the arrangement step, the plurality of rotors are supported by the fuselage and arranged such that, even if the first rotor is broken, the first rotor does not collide with the fuselage or the second rotor.

### BRIEF DESCRIPTION OF DRAWINGS

[Fig. 1] Fig. 1 is a perspective view illustrating an overview of an aircraft 300.
[Fig. 2] Fig. 2 is a partially enlarged view of part of the aircraft 300.
[Fig. 3] Fig. 3 is a perspective view illustrating the arrangement of rotors 330 in the aircraft 300.
[Fig. 4] Fig. 4 is a front view illustrating the arrangement of the rotors 330 in the aircraft 300.
[Fig. 5] Fig. 5A is a rotational surface 340 of a rotor 332 which is an example of a first rotor, Fig. 5B is a tangent plane 410 to a virtual curved surface 400, and Fig. 5C is a view illustrating the composite view of Fig. 5A and Fig. 5B.

### DETAILED DESCRIPTION

Hereinafter, an embodiment of the present invention will be described using the drawings. The various features presented in the embodiment shown below may be combined with each other.

### < Embodiment>

### 1. Overview of Embodiment

In the first section, an overview of the embodiment will be described.

### 1-1. Name of Embodiment

Rotor Layout to Prevent Secondary Damage due to Rotor Breakage

### 1-2. Conventional Art

In other aircrafts in conventional art among aircrafts having a plurality of rotors, the other aircrafts are not structured such that when a rotor is broken, damage to other rotors or the fuselage is avoided. Thus, severe damage has been prevented by increasing the number of rotors to enhance the redundancy, and reinforcing the structure. This causes a complicated fuselage, and an increase in the fuselage weight.

Content: Structure that at the time of propeller breakage of a multicopter, gives no damage to other propellers or the fuselage structure.

### 1-3. Problems to Be Solved by Embodiment

In a conventional structure, at the time of propeller breakage, broken pieces may collide with other propellers or the fuselage structure, and as a result of functional damage, the aircraft may crash. To cope with this, the number of rotors is increased to ensure redundancy which results in a complicated fuselage, or the fuselage is reinforced to prevent breakage, causing an increase in the weight. The weight increase has caused decrease in the payload, reduction in the flight range, or degradation of the performance.

### 1-4. Solution to Problem

Each rotor is arranged on a convex curved surface that encloses the entire fuselage structure, and the rotational surface of the rotor is set to be tangent to the curved surface, thus an optimal distance between rotors can be maintained, and an appropriate angle of the rotor can be set so that a layout is achieved in which broken pieces at the time of rotor breakage do not interfere with the other rotors and the fuselage structure, and give no damage to the other rotors or the fuselage. The arrangement method is provided in which the angle of the laterally thrown rotor at the time of rotor breakage is predicted to prevent collision with other rotors.

### 1-5. Advantages of Embodiment

Because any rotor gives no damage to the other rotors and the fuselage, it is not necessary to set additional components needed for reinforcement to avoid damage to the fuselage structure, thus weight reduction can be achieved. In addition, secondary damage due to broken pieces of a rotor does not need to be considered, thus consideration of redundancy or the like can be reduced, therefore simplification of the system can be achieved, and redundancy of rotors can be reduced. Furthermore, at the time of rotor breakage, additional power needs to be set by other rotors to generate thrust to compensate the lift force; however, since the degree of breakage of the rotor can be reduced, the emergency output needed at the time of breakage can be decreased, and the power required for the motor and battery or the like can be lowered, thus the lightweighting effect of the entire fuselage is obtained. Due to these effects, increase of the payload and extension of the flight range of the fuselage itself are made possible, thus the performance of the fuselage itself can be improved.

### 1-6. Example

In this example, a sphere that encloses the body fuselage is set, rotors are arranged on the spherical surface, and the rotational surface of each rotor is set to be tangent to the surface of the sphere. The bold blue line indicates the rotors, and a gray portion indicates the fuselage structure. The black dashed line indicates the sphere which is set in this example, and each rotor is set on the spherical surface so that the rotational surface is tangent to the sphere. The space between the rotors is set so that the rotors do not interfere with each other. The blue thin line indicates a path of a thrown rotor when the rotor is broken due to collision with a bird or the like. The blue thin line does not intersect any of the other rotors or the body fuselage, thus the rotor does not collide with the other rotors or the body fuselage. Thus, conventionally, reinforcement of the fuselage is needed to prevent breakage of a body fuselage region with which a broken rotor has collided, and the thrust of other rotors needs to be enhanced by further increasing the number of spare rotors in case of breakage of other rotors by the broken rotor; however, these redundancy can be reduced.

### 1-7. Other Examples, Appendix to Be Described

In addition, similar setting can be easily made with an ellipsoid like a rugby ball, which encloses the body fuselage structure. Furthermore, setting can be made with a convex curved surface which encloses the body fuselage structure. Furthermore, a cone or a cylinder may be set to enclose the sphere which has been set, and rotors with a changed angle can also be arranged by similarly arranging the rotors on the surface of the previously set cone or cylinder.

### 1-8. Implemented Aspects

(8-1) Method of Arranging Rotors to Prevent Collision Therebetween Even If Rotors Are Laterally Thrown. (8-2) Aircraft with Plurality of Rotors Arranged on Curved Surface. (8-3) Aircraft in Which Curved Surface Is Spherical. (8-4) Aircraft Is Manned Aircraft.
(1) An aircraft comprising: a fuselage; and a plurality of rotors, wherein the fuselage supports the plurality of rotors, the plurality of rotors are arranged such that the fuselage or the other rotors are not located on a plane extending in a radial direction of the rotational surface of the rotor.
(2) In the aircraft according to (1), wherein the plurality of rotors are arranged on a virtual curved surface which is outside the fuselage and convex outwardly of the fuselage.
(3) The aircraft according to (2), wherein the plurality of rotors are arranged such that the rotational surface and a tangent plane to the curved surface approximately match.
(4) The aircraft according to (2) or (3), wherein the curved surface is a spherical surface.
(5) The aircraft according to any one of (1) to (4), wherein the aircraft is a manned aircraft.
(6) An arrangement method comprising: a preparation step; and an arrangement step, wherein in the preparation step, a fuselage and a plurality of rotors are prepared, in the arrangement step, the plurality of rotors are supported by the fuselage and arranged such that when a first rotor is broken, a second rotor or the fuselage does not collide with the fuselage.
(7) The arrangement method according to (6), wherein in the arrangement step, the plurality of rotors are arranged such that the fuselage or the second rotor is not located on a plane extending in a radial direction of a rotational surface of the rotor.

### 2. Overview of Aircraft 300

In the second section, an overview of the aircraft 300 will be described.

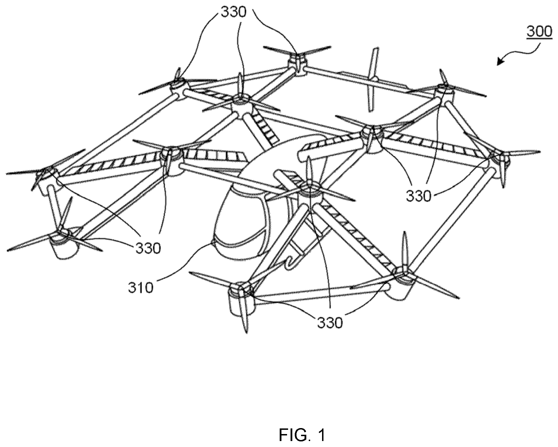

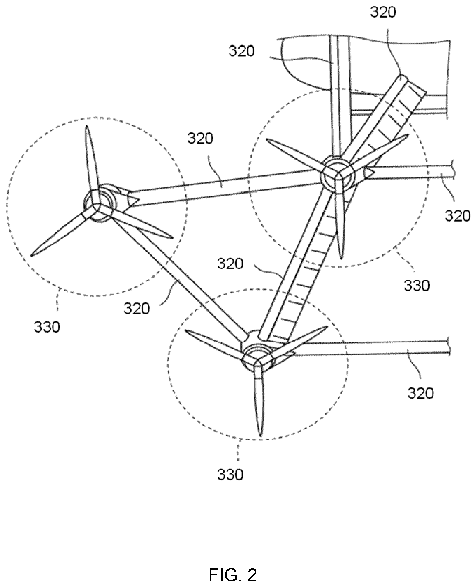

Fig. 1 is a perspective view illustrating an overview of the aircraft 300. Fig. 2 is a partially enlarged view of part of the aircraft 300. In Fig. 1, the symbol of a rotor frame 320 is omitted. The aircraft 300 is a manned aircraft capable of vertical takeoff and landing. The aircraft 300 includes a fuselage 310, a plurality of rotor frames 320, and a plurality of rotors 330. The plurality of rotors 330 include a first rotor and a second rotor. In the following, a description may be given assuming that the first rotor is any one of the plurality of rotor 330, and the second rotor is a rotor different from the first rotor among the plurality of rotor 330. These components will be further described.

The fuselage 310 is located in approximately the center of the aircraft 300. The fuselage 310 supports the plurality of rotors 330 via the rotor frames 320. The fuselage 310 includes an internal passenger compartment which is not illustrated. The passenger compartment is configured to accommodate passengers. The fuselage 310 may have a streamlined shape to reduce the air resistance when flying forward.

The rotor frames 320 are supported by the fuselage 310 above the fuselage 310. The rotor frames 320 are configured to expand outwardly from the support positions in the fuselage 310. The rotor frames 320 support the rotors 330 at both ends of each rotor frame 320. The rotor frames 320 may have a mesh structure in which a plurality of rod-shaped members are connected to each other.

The rotors 330 are supported by the rotor frames 320 above the rotor frames 320. Each rotor 330 is configured to be rotatable at the position at which the rotor 330 is supported by the rotor frames 320. The rotor 330 generates buoyancy force and thrust force of the aircraft 300 by being rotated by a motor which is not illustrated. The rotational speed and rotational direction of the rotor 330 are controlled by a control system which is not illustrated. The plurality of rotors 330 are arranged such that the fuselage 310 or the second rotor is not located on a plane extending in a radial direction of the rotational surface 340 of the first rotor. In other words, the rotational surface 340 is the trajectory obtained by rotating an extended line of the line segment from the rotational center of the first rotor to the distal end. The arrangement of the rotors 330 will be described below.

### 3. Arrangement Method for Rotors 330

In the third section, the arrangement method for the rotors 330 will be described. The arrangement method includes a preparation step, and an arrangement step. In the preparation step, the fuselage 310 and the plurality of rotors 330 are prepared. The plurality of rotors 330 include the first rotor, and the second rotor. In the arrangement step, the plurality of rotors 330 are supported by the fuselage 310, and arranged such that even if the first rotor is broken, the first rotor does not collide with the fuselage 310 or the second rotor.

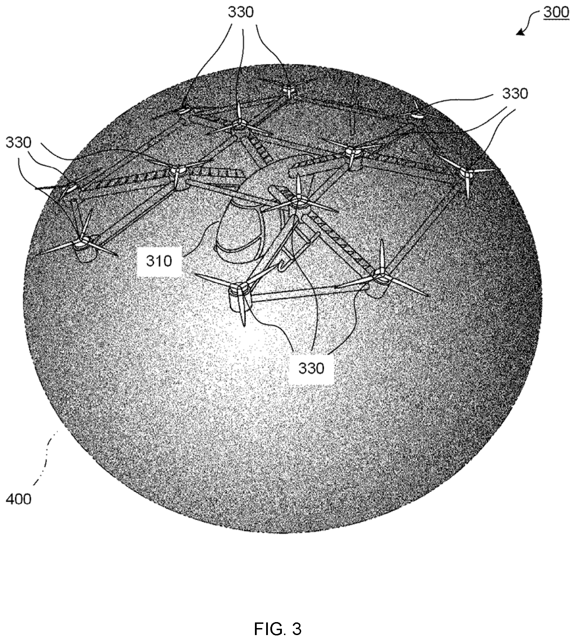

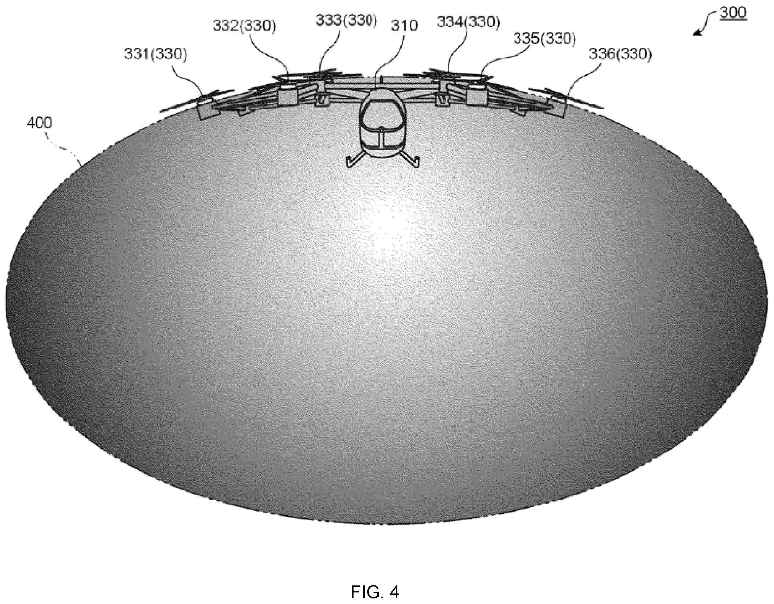

Fig. 3 is a perspective view illustrating the arrangement of the rotors 330 in the aircraft 300. Fig. 4 is a front view illustrating the arrangement of the rotors 330 in the aircraft 300. Fig. 3 and Fig. 4 illustrate a virtual curved surface 400 which is a virtual curved surface. In Fig. 4, a description will be given using a rotor 331, a rotor 332, a rotor 333, a rotor 334, a rotor 335 and a rotor 336 (hereinafter collectively referred to as "rotors 331 to 336") among the plurality of rotors 330 as examples.

The plurality of rotors 330 are arranged on the virtual curved surface 400 which is outside the fuselage 310 and convex outwardly of the fuselage 310. In Fig. 3, the rotors 330 are arranged on the virtual curved surface 400. In Fig. 4, the rotors 331 to 336 are arranged on the virtual curved surface 400. Because the rotor frames 320 supporting the rotors 330 extend from the fuselage 310 along the virtual curved surface 400, the rotors 330 are arranged like this. According to this aspect, when the plurality of rotors 330 are installed (arranged), fine adjustment of the rotors 330 is not necessary, thus the plurality of rotors 330 can be easily positioned.

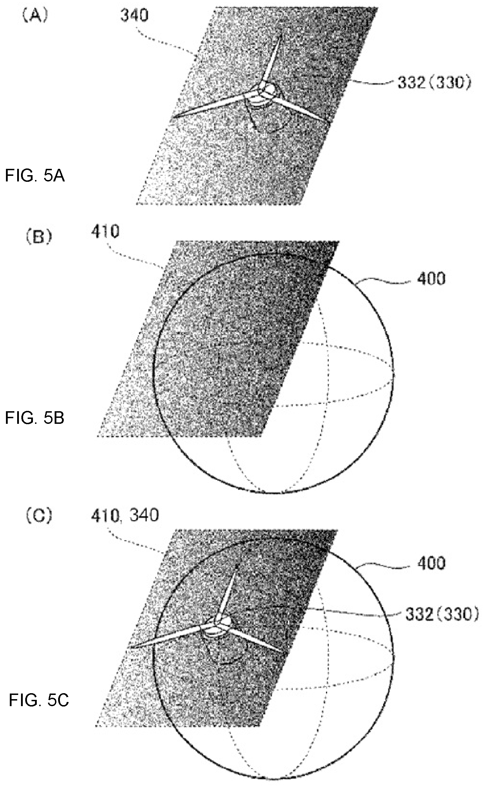

Fig. 5A is the rotational surface 340 of the rotor 332 which is an example of the first rotor, Fig. 5B is a tangent plane 410 to the virtual curved surface 400, and Fig. 5C is a view illustrating the composite view of Fig. 5A and Fig. 5B. The plurality of rotors 330 are arranged such that the rotational surface 340 and the tangent plane 410 to the virtual curved surface 400 approximately match. Specifically, in the arrangement step, the plurality of rotors 330 are supported by the fuselage 310, and arranged such that the fuselage 310 or the rotors 331, 333 to 336 (the second rotors) are not located on a plane extending in a radial direction of the rotational surface 340 of the rotor 332 (the first rotor). According to this aspect, when the rotors 330 are installed (arranged), it is not necessary to consider the positional relationship between the rotational surface 340 of each rotor 330 (the first rotor) and the fuselage 310 or the other rotors 330 (the second rotor), thus the rotors 330 can be easily positioned.

As illustrated in Fig. 5, the virtual curved surface 400 may be a spherical surface. According to this aspect, the plurality of rotors 330 can be arranged in a balanced way, thus the force during flight can be dispersed in a balanced way. Therefore, according to this aspect, the fuselage 310 during flight can be easily controlled.

According to the aspect of the embodiment, the following (1) to (4) can be provided. (1) Even if breakage of a rotor 330 causes broken pieces thereof to be thrown by a centrifugal force, the probability of collision of the broken pieces with the other rotors 330 and the fuselage 310 can be reduced. Consequently, it is not necessary to set additional components needed for reinforcement to avoid damage to the fuselage 310, thus the weight of the aircraft 300 can be reduced. (2)

The necessity to consider the secondary damage due to broken pieces of the rotor 330 can be reduced. Consequently, the necessity to ensure the redundancy of the rotor 330 is reduced, thus the configuration of the aircraft 300 can be simplified. (3) It is possible to reduce the necessity to set additional power by other rotors 330 to generate thrust to compensate the lift force in case of breakage of the rotor 330. Consequently, the power required for the motor and battery or the like can be lowered, thus the weight of the aircraft 300 can be reduced. (4) According to (1) to (3), increase of the payload and extension of the flight range of the fuselage 310 are made possible, thus the performance of the fuselage 310 can be improved.

As described above, when the aircraft 300 is a manned aircraft, even if the rotor 330 is broken, the possibility of causing harm to the pilot or passengers due to broken pieces of the rotor 330 can be reduced.

Although the embodiment of the present invention has been described above, the present invention is not limited to this, and in a range not departing from the technical idea of the invention, modifications may be made as appropriate.

### 4. Others

The invention may be provided in each of the aspects described in the following.
(1) An aircraft comprising: a fuselage; and a plurality of rotors, wherein the fuselage supports the plurality of rotors, the plurality of rotors include a first rotor and a second rotor, and the plurality of rotors are arranged such that the fuselage or the second rotor is not located on a plane extending in a radial direction of a rotational surface of the first rotor.

According to this aspect, the following (1) to (4) can be provided. (1) Even if breakage of a rotor causes broken pieces thereof to be thrown by a centrifugal force, the probability of collision of the broken pieces with the other rotors and the fuselage can be reduced. Consequently, it is not necessary to set additional components needed for reinforcement to avoid damage to the fuselage, thus the weight of the aircraft can be reduced. (2) The necessity to consider the secondary damage due to broken pieces of the rotor can be reduced. Consequently, the necessity to ensure the redundancy of rotors is reduced, thus the configuration of the aircraft can be simplified. (3) It is possible to reduce the necessity to set additional power by other rotors to generate thrust to compensate the lift force in case of breakage of the rotor. Consequently, the power required for the motor and battery or the like can be lowered, thus the weight of the aircraft can be reduced. (4) According to (1) to (3), increase of the payload and extension of the flight range of the fuselage are made possible, thus the performance of the fuselage can be improved.

(2) The aircraft according to (1), wherein the plurality of rotors are arranged on a virtual curved surface which is outside the fuselage and convex outwardly of the fuselage.

According to this aspect, when a rotor is installed (arranged), fine adjustment of the rotor is not necessary, thus the rotor can be easily positioned.

(3) The aircraft according to (2), wherein the plurality of rotors are arranged such that the rotational surface and a tangent plane to the curved surface approximately match.

According to this aspect, when a rotor is installed (arranged), it is not necessary to consider the positional relationship between the rotational surface of the rotor and the fuselage or the other rotors, thus the rotor can be easily positioned.

(4) The aircraft according to (2) or (3), wherein the curved surface is a spherical surface.

According to this aspect, the plurality of rotors can be arranged in a balanced way, thus the force during flight can be dispersed in a balanced way. Therefore, according to this aspect, the fuselage during flight can be easily controlled.

(5) The aircraft according to any one of (1) to (4), wherein the aircraft is a manned aircraft.

According to this aspect, even if the rotor is broken, the possibility of causing harm to the pilot or passengers due to broken pieces of the rotor can be reduced.

(6) An arrangement method comprising: a preparation step; and an arrangement step, wherein in the preparation step, a fuselage and a plurality of rotors are prepared, the plurality of rotors include a first rotor and a second rotor, and in the arrangement step, the plurality of rotors are supported by the fuselage and arranged such that even if the first rotor is broken, the first rotor does not collide with the fuselage or the second rotor.

According to this aspect, the following (1) to (4) can be provided. (1) Even if breakage of a rotor causes broken pieces thereof to be thrown by a centrifugal force, the probability of collision of the broken pieces with the other rotors and the fuselage can be reduced. Consequently, it is not necessary to set additional components needed for reinforcement to avoid damage to the fuselage, thus the weight of the aircraft can be reduced. (2) The necessity to consider the secondary damage due to broken pieces of the rotor can be reduced. Consequently, the necessity to ensure the redundancy of rotors is reduced, thus the configuration of the aircraft can be simplified. (3) It is possible to reduce the necessity to set additional power by other rotors to generate thrust to compensate the lift force in case of breakage of the rotor. Consequently, the power required for the motor and battery or the like can be lowered, thus the weight of the aircraft can be reduced. (4) According to (1) to (3), increase of the payload and extension of the flight range of the fuselage are made possible, thus the performance of the fuselage can be improved.

(7) The arrangement method according to (6), wherein in the arrangement step, the plurality of rotors are supported by the fuselage and arranged such that the fuselage or the second rotor is not located on a plane extending in a radial direction of a rotational surface of the first rotor.

According to this aspect, the following (1) to (4) can be provided. (1) Even if breakage of a rotor causes broken pieces thereof to be thrown by a centrifugal force, the probability of collision of the broken pieces with the other rotors and the fuselage can be reduced. Consequently, it is not necessary to set additional components needed for reinforcement to avoid damage to the fuselage, thus the weight of the aircraft can be reduced. (2) The necessity to consider the secondary damage due to broken pieces of the rotor can be reduced. Consequently, the necessity to ensure the redundancy of rotors is reduced, thus the configuration of the aircraft can be simplified. (3) It is possible to reduce the necessity to set additional power by other rotors to generate thrust to compensate the lift force in case of breakage of the rotor. Consequently, the power required for the motor and battery or the like can be lowered, thus the weight of the aircraft can be reduced. (4) According to (1) to (3), increase of the payload and extension of the flight range of the fuselage are made possible, thus the performance of the fuselage can be improved. Provided aspects are not limited to these.

### [Symbol explanation]

300 AIRCRAFT
310 FUSELAGE
320 ROTOR FRAME
330 ROTOR
331 ROTOR
332 ROTOR
333 ROTOR
334 ROTOR
335 ROTOR
336 ROTOR
340 ROTATIONAL SURFACE
400 VIRTUAL CURVED SURFACE
410 TANGENT PLANE

## Claims

1. An aircraft comprising:
a fuselage; and a plurality of rotors,
wherein the fuselage supports the plurality of rotors,
the plurality of rotors include a first rotor and a second rotor, and
the plurality of rotors are arranged such that the fuselage or the second rotor is not located on a plane extending in a radial direction of a rotational surface of the first rotor.

2. The aircraft according to Claim 1,
wherein the plurality of rotors are arranged on a virtual curved surface which is outside the fuselage and convex outwardly of the fuselage.

3. The aircraft according to Claim 2,
wherein the plurality of rotors are arranged such that the rotational surface and a tangent plane to the curved surface approximately match.

4. The aircraft according to Claim 2 or 3,
wherein the curved surface is a spherical surface.

5. The aircraft according to any one of Claims 1 to 4,
wherein the aircraft is a manned aircraft.

6. An arrangement method comprising:
a preparation step; and an arrangement step,
wherein in the preparation step, a fuselage and a plurality of rotors are prepared,
the plurality of rotors include a first rotor and a second rotor, and
in the arrangement step, the plurality of rotors are supported by the fuselage and arranged such that even if the first rotor is broken, the first rotor does not collide with the fuselage or the second rotor.

7. The arrangement method according to Claim 6,
wherein in the arrangement step, the plurality of rotors are supported by the fuselage and arranged such that the fuselage or the second rotor is not located on a plane extending in a radial direction of a rotational surface of the first rotor.
